# EUROPÄISCHE PATENTSCHRIFT

(11) **EP 1 686 047 B1**
(45) Veröffentlichungstag und Bekanntmachung des Hinweises auf die Patenterteilung: **17.12.2008**
(21) Anmeldenummer: 05021361.0
(22) Anmeldetag: 30.09.2005
(51) Int. Cl.: B62D 63/06

(54) **Zusammenklapbarer Anhänger**
Folding Trailer
Remorque pliante

(30) Priorität: 02.11.2004 DE 202004017016 U
(43) Veröffentlichungstag der Anmeldung: 02.08.2006
(73) Patentinhaber: MWK Rides, Michael Wiest, 56567 Neuwied (DE)
(72) Erfinder: Wiest, Michael, 56567 Neuwied (DE)

(56) Entgegenhaltungen:
- CH-A- 315 782
- DE-U1- 20 015 318
- FR-A- 2 826 322
- US-A1- 2002 195 798
- US-A1- 2003 102 655

## Beschreibung

Die Erfindung betrifft einen Anhänger für Pkw und andere Fahrzeuge, dadurch gekennzeichnet, dass er, mit dem Pkw oder anderen ziehenden Fahrzeug über eine übliche Anhänger-Kugelkopf-Kupplung sowohl beladen auf eigenen Rädern oder vornehmlich leer ohne Bodenberührung mit der Fahrbahn und ohne Beanspruchung von Laderaum im Fahrzeug mitgeführt werden kann.

Nach den geltenden rechtlichen Vorschriften unterliegen Fahrzeuge mit Anhänger einschränkenden Geschwindigkeitsbegrenzungen. Das bewirkt insbesondere auf längeren Strecken einen wesentlichen unerwünschten Mehraufwand an Zeit.

Leere Pkw-Anhänger haben zudem bei unebenen Fahrbahnen und bei Seitenwind beachtlichen negativen Einfluss auf das Fahrverhalten des ziehenden Fahrzeugs.

Nach dem Stand der Technik sind eine Reihe von Lösungen für faltbare Anhänger bekannt. Sie sind alle dadurch gekennzeichnet, dass ihr Raumbedarf im Leerzustand vornehmlich durch Falten oder Klappen zwar wesentlich reduziert werden kann, dass sie aber anschließend Laderaum innerhalb des Fahrzeugs für das Mitführen benötigen oder für ein raumsparendes Anstellen in der Garage konzipiert sind.

Der Stand der Technik wird vornehmlich ausgewiesen durch die Patentanmeldung US 2002/195789 A1 (James Paul Allen) 26.12.02 (nachfolgend als D 1 bezeichnet.

Die Anmeldung beschreibt zwar einen Anhänger hinter einem Zugfahrzeug, dass auf Eigenen Rädern lasttragend von einem Zugfahrzeug gezogen wie auch aufgerichtet Ohne Bodenberührung von einem Zugfahrzeug getragen mitgeführt werden kann. Das geschilderte Fahrzeug ist aber mit seinem technischen Merkmalen ungeeignet, die Der vorliegenden Erfindung gestellte Aufgabe zu erfüllen. Es ist weiter fragwürdig, ob die vorgeschlagene Lösung überhaupt technisch realisierbar ist D 1 stellt die Verbindung zwischen Zugfahrzeug und Anhänger durch eine Kugelkopf-Kupplung her. Für einen in Fahrt mitgeführten Anhänger ist es zwingend erforderlich, dass die Kupplung bei Kurvenfahrt sich um eine etwa senkrechte Achse auf dem Kugelkopf drehen kann. Weiter muss sich für Fahrt über Hindernisse oder auf unebener Fahrbahn die Kupplung um eine etwa waagerechte Achse bewegen können. Diese um zwei Achsen drehbare Verbindung zwischen Zugfahrzeug und Anhänger ist ungeeignet für das Tragen des Anhängers in hochgeklapptem Zustand, besonders, wenn der Schwerpunkt des Anhängers außerhalb der Senkrechten über dem Kugelkopf liegt.

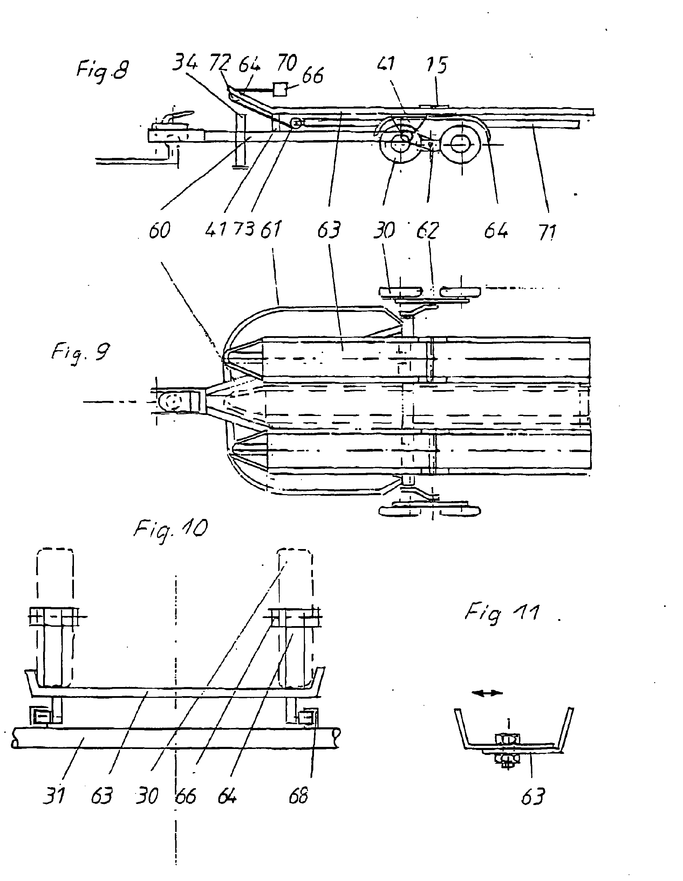

Die Erfindung ist im dargestellten Zustand ( insbesondere Fig. 11) nicht realisierbar. Entweder ist die Kupplung, wie handelsüblich, frei beweglich, dann ist sie nicht in der Lage, die in Fig. 11 dargestellte Form des hochgeklappten Anhängers mit einem waagerechten Deichselteil (62) und einem Drehpunkt zum Anhänger (70) diesen in senkrechter Position zu tragen.

Geht der Erfinder aber, obwohl in keiner Weise in der Patentschrift erwähnt oder erläutert, von einer unbeweglichen Verbindung zwischen Kupplung und Kupplungskopf aus, um die Darstellung Fig. 11 zu realisieren, dann ist diese Vorstellung falsch, denn es fehlt die für den Verkehr notwendige freie Beweglichkeit um eine senkrechte Achse.

Eine Beweglichkeit um eine waagerechte Achse steht ebenfalls nicht zur Verfügung, denn die Deichsel (62) ist mit dem Anhänger in Fahrt über die Bolzen (70) und (72) starr verbunden.

Die Erfindung D 1 ist für den Einsatz hinter Pkw nach europäischen Rechtsnormen absolut ungeeignet, weil mit der Anordnung der Achse am hinteren Ende des Anhängers der größte Teil der Last des Anhängers über die Kupplung auf das Zugfahrzeug übertragen und damit ein Pkw überlastet würde und die gesetzlichen Vorschriften über Anhängelasten und Kupplungsbelastungen eine solche Vorgehensweise ausschließen.

Die Erfindung entspricht nicht Art. 532(1) zur technischen Verwendbarkeit.

Sowohl die Erfindung D 1 als auch
FR-A-2 826 322 (Wanner Jean) vom 27.12.03
(nachfolgend D 2 genannt) besitzen eine faltbare Ladefläche (D 2 keine geschlossene Ladefläche) die sich auf darunter vorgesehene tragend Rahmen abstützt. Die auf der Ladefläche aufgebrachten Lasten werden daher entweder von dem darunter liegenden Rahmen( D1: (22,24) D2 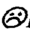 11,12) getragen. Die auftretenden Kräfte an den Faltachsen erfordern einen gewichtsaufwendigen Materialeinsatz zur Aufnahme der Kräfte. Eine solche Konstruktion ist ungeeignet für die Erfüllung der dieser Erfindung gestellten Aufgabe, so leicht zu sein, dass sie von handels-üblichen Pkw-Kupplungen aufgerichtet getragen werden kann.

Kennzeichnend für die vorliegende Erfindung ist daher, dass für die Ladefläche eine Wannenform (3, 4, 5) verwendet wird, die bei geeigneter Anordnung der Achse (31 ) die auftretenden Zugkräfte (unten) und Druckkräfte (Oberkante Wanne) minimiert und damit auch der Materialaufwand auf ein zuträgliches Maß reduziert werden kann. Sowohl D1 wie auch D2 haben nur flache Ladeflächen, sie sind daher nicht geeignet lose Güter ohne zusätzlichen beachtlichen Zurraufwand zu transportieren.

Der ausgewiesene Stand der Technik genügt danach nicht den Erfordernissen der Aufgabenstellung dieser Erfindung.

Die Erfindung D 4 weist zwar eine einschiebbare Ladebrücke auf, diese hat aber eine allein raumbegrenzende Aufgabe. Die am Knickpunkt (3) auftretenden Knickkräfte werden allein durch die Rahmenteile (1) und (2) in Verbindung mit dem Bügel aufgenommen. Diese Konstruktion erfordert, sollte er nicht wie in D 4 vorgesehen als Schlafplatz in Ruhestellung sondern als Lastträger in Fahr vorgesehen werden, so erfordert diese Konstruktion Materialstärken und damit Leergewicht , die die zulässige Belastung der Pkw-Kupplung übersteigt.

D 4 macht keinerlei Aussagen über die Art der Verbindung zwischen Anhänger und Zugfahrzeug. In hochgeklapptem Zustand kippt der Anhänger bei Verwendung einer üblichen Kugelkopfkupplung seitlich weg.

D3 stellt zwar einen faltbaren Anhänger dar, Dieser ist aber nicht zum Mitführen in gefaltetem Zustand vorgesehen, dafür völlig ungeeignet. Die denkbare Verbindung zum Zugfahrzeug steht in gefaltetem Zustand senkrecht nach oben und ist damit mit dem Zugfahrzeug nicht verbindbar.

D3 hat allein zur Aufgabe, den Raumbedarf beim ungenutzt abgestellten Anhänger zu reduzieren ( Vergl. Teil 148 ausfahrbare Stützfüße)

D 3 ist daher für die der Erfindung gestellten Aufgaben absolut ungeeignet und seine Aufgabenstellung nicht Stand der Technik. Der aufwendige Faltmechanismus ist für einen von der Kugelkopfkupplung an Pkw zu gewichtsaufwendig, zu kompliziert und zu raumaufwendig.

D 5 Diese Erfindung hält sich in allgemeinen Aussagen, die tatsächliche technische Ausführung, - die Anleitung zu ihrer Realisierung - das Aussehen und die Beschreibung der Zusammenführung der Teile bleiben im Dunkeln.

D 5 hat keinerlei Wirkung auf die Ansprüche 1, 2 und Folgende dieser Erfindung Aufgabe dieser Erfindung ist es, einen Anhänger vorzustellen, der
- von Pkw und anderen Fahrzeugen außerhalb der Ladeflächen mitführbar ist,
- das Profil des Fahrzeugs nicht wesentlich übersteigt,
- vornehmlich die vorhandene Anhängerkupplung ( Kugelkopfkupplung ) als Träger benutzt,
- der Schwerpunkt des Anhängers verladen möglichst nahe der Hinterachse des Trägerfahrzeugs liegt
- ein möglichst geringes Restvolumen hat,
- ein minimales Eigengewicht hat, zuträglich für die Stützlastzulassung der Anhängerkupplung,
- für den Transport von Fahrzeugen besonders hergerichtet ist,
- leicht und nur mit geringem Kraft- und Zeitaufwand verladbar und verkehrstüchtig herrichtbar gestaltet ist
- durch einfache Konstruktion kostengünstig herstellbar ist.

Nachfolgend wird die Erfindung anhand von Zeichnungen dargestellt. Dabei geben diese Zeichnungen nur Lösungsbeispiele an und schließen weitere erfindungsgemäße Gestaltungen nicht aus.

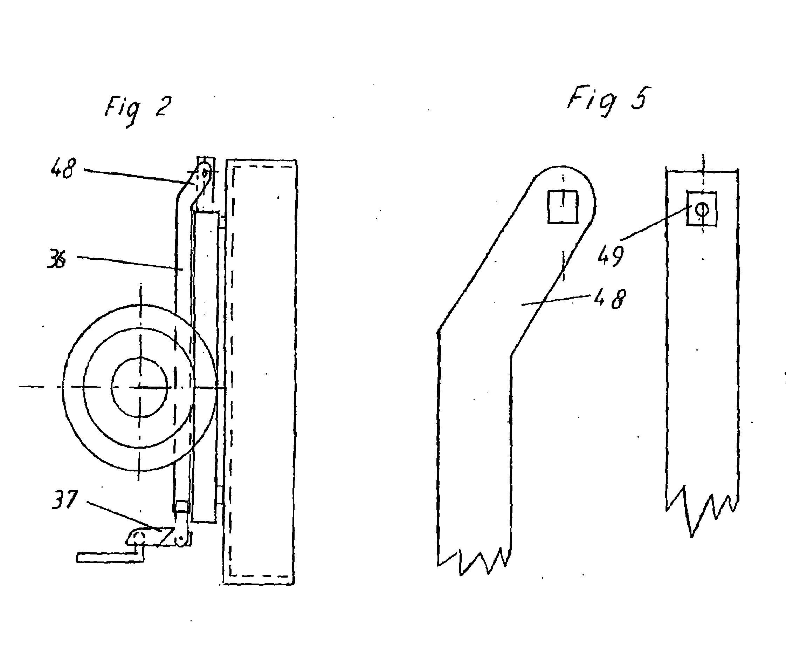

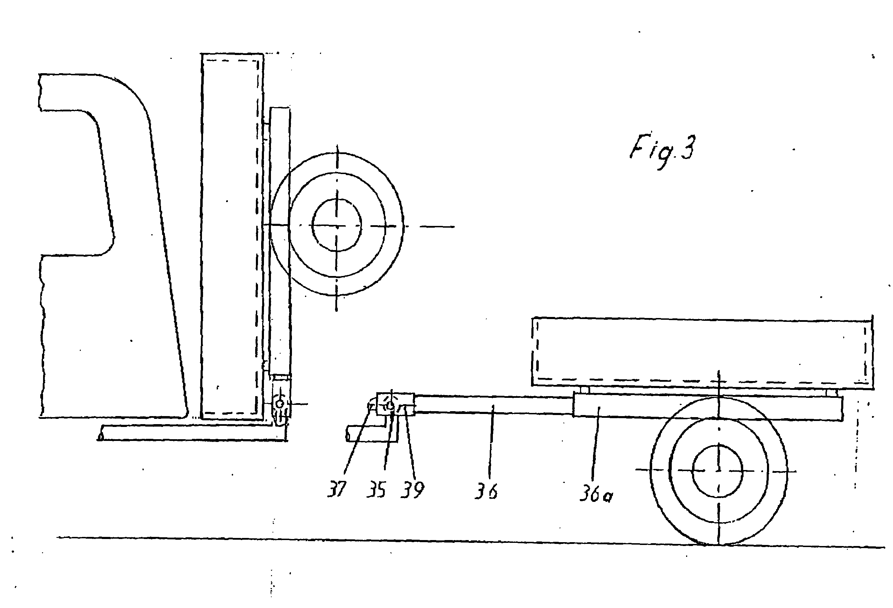

Prinzipiell kann das Mitführen eines Anhängers außerhalb des Laderaums nur durch Senkrechtstellen am rückwärtigen Ende des Fahrzeugs, insbesondere des Pkw, erreicht werden. Das erfordert eine Reduzierung der Gesamtlänge des Anhängers. Die vor-liegende Erfindung erreicht dies auf verschiedenen Wegen:
- zusätzliche Aufteilung der Ladefläche in zwei oder mehrere Teil-Ladeflächen, die drehbar (faltbar) miteinander verbunden sind (Reduzierung auf etwa ein Drittel, ein Viertel usw. der Gesamtlänge)
- durch Anordnung eines Gelenks nahe der Kugelkopfkupplung und einer weiteren Gelenkverbindung etwa am Beginn der Ladefläche (Reduzierung auf etwa halbe Gesamtlänge vergl. Fig.2)
- für Anhänger mit kurzer Ladefläche durch Einschieben einer teleskopierbaren Deichsel (vergl. Fig.3 )

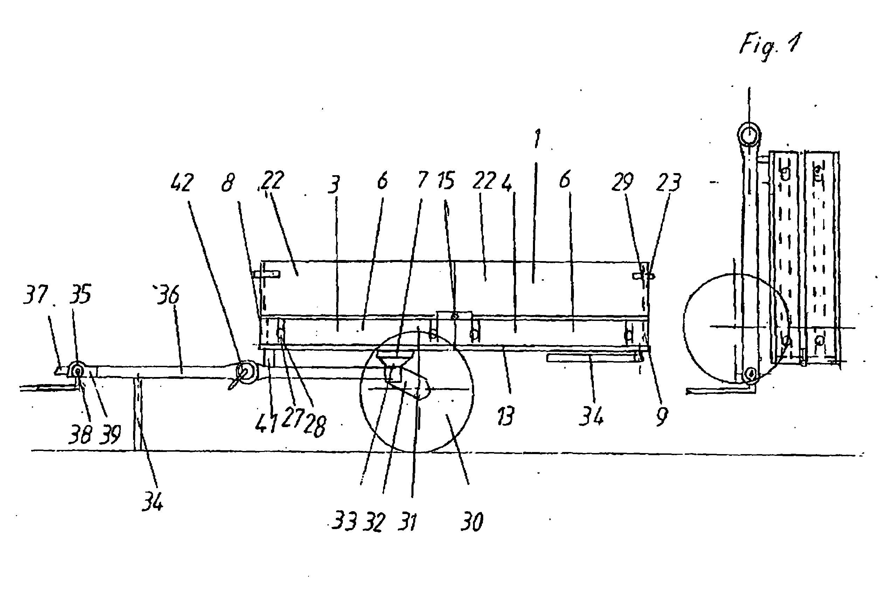

Fig. 1 zeigt einen auf ein Drittel der Gesamtlänge reduzierbaren Anhänger. Erfindungsgemäß besteht der Laderaum aus 2 Halbwannen (3, 4), die vornehmlich aus dem Boden (13) und mit diesem fest lasttragend verbunden den Seitenholmen (6) und dem Stirnwandholm (8) bestehen. Es bietet sich an, dass die Halbwannen aus faserverstärktem Kunststoff in je einem Stück gefertigt werden.

Die Seitenwandholme (6) sind an ihrer Oberkante mit Scharnieren (15) drehbar ver- bunden. So kann die hintere Halbwanne (4) auf die vordere Halbwanne (3) geklappt werden. Falls zwischen den beiden Halbwannen noch eine zusammenlegbare Plane mit Gestell oder feste Wände untergebracht werden müssen, ist eine kurze Mittelwanne (5) ( nicht gezeichnet),zwischen den Halbwannen (3) und (4) angeordnet.

Die Heckwand (9) ist abklappbar oder herausnehmbar gestaltet, um Zugang zum Boden (13) zu ermöglichen.

Erfahrungsgemäß wird bei den meisten Ladungen zur Ladungssicherung nur eine geringe Bordwandhöhe benötigt. Demzufolge haben die Holme (6,7,8 und 9) nur geringe Bauhöhe. Sie sind weiter mit Anschlagpunkten für die Ladungssicherung ausgestattet.

Die Anordnung der Scharniere (15) an der Oberkante der Seitenholme (6) bewirkt, dass die Last der hinteren Halbwanne mit ihrer Ladung die Scharniere auf Zug beansprucht. Die Böden (13) und die Unterkanten der Seitenholme werden auf Druck beansprucht. Damit sind die Sicherungen (17) die ein unbeabsichtigtes Aufklappen verhindern und eine gesicherte Verbindung zwischen den Halbwannen in geklapptem Zustand bewirken nicht kraftbelastet und lassen sich leicht lösen. Es werden handels-übliche Sicherungen verwendet

Zur Erhöhung des Volumens des umschlossenen Laderaums sind Setzborde (22,23) vorgesehen. Sie sind mit nach unten herausragendenden Rohren, Stangen o.ä. (26) versehen, die in korrespondierende Öffnungen (27) einsetzbar sind. Die Setzborde können einen Rahmen (24) haben, der in eine Nut (25) des benachbarten Setzbords eingreift.

Die Verwahrung der Setzborde in zusammengeklapptem Zustand des Anhängers ist innerhalb der Halbwannen vorgesehen. Dazu sind die Holme mit etwa waagerechten und höhenmäßig abgestuften Löchern (28) versehen.

Übliche Anhängerkupplungen lassen zwar ein leichtes Anheben oder Absenken der angekuppelten Deichsel zu, nicht aber ein Aufstellen in eine etwa senkrechte Lage..

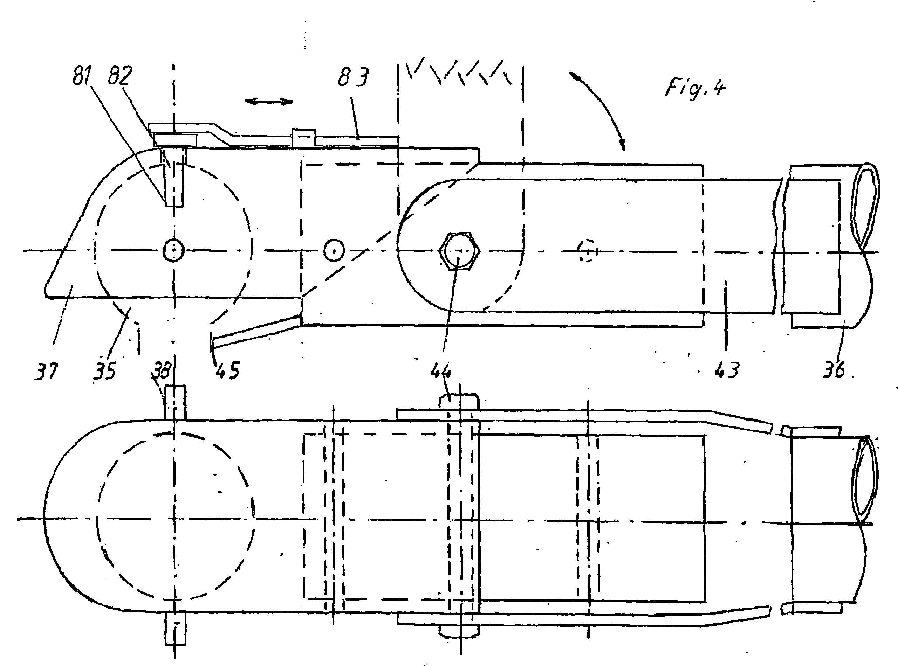

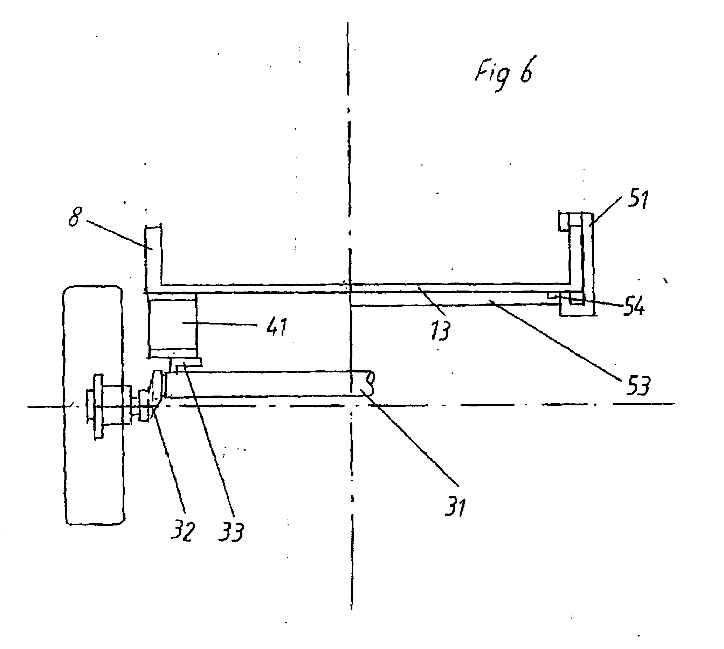

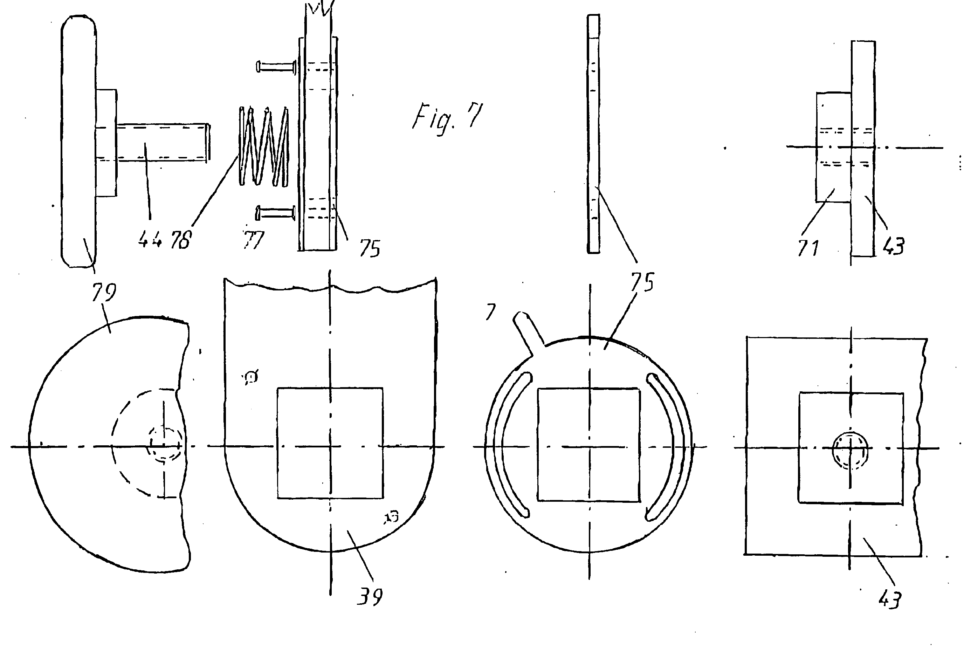

Fig. 4 zeigt eine erfindungsgemäße Gestaltung einer handelsüblichen Kugelkopf-Kupplung. Soll der Drehpunkt der Deichsel (36) auf der Ebene des Kugelkopfes (35) liegen, so werden an der Zugkugel-Kupplung (35) seitlich zwei Bolzen (38) dauerhaft
befestigt, z.B. angeschweißt. An der Deichsel (36 werden zur Kupplung hin zwei Deichselwangen (39) befestigt, in die die Bolzen (38) drehbar hineinragen. So wird eine Senkrechtstellung der Deichsel ermöglicht.

Der Abstand des Kugelkopfes von der davor liegenden Karosserie ist nicht immer ausreichend, um den Anhänger in Senkrechtstellung unterzubringen. Notwendig ist, den Abstand des Drehpunktes der Deichsel zum Ende der Karosserie variabel zu gestalten.

Dazu erhält die Kupplung (37) einen Deichselstummel (43), der mit mehreren waagerechten Bohrungen versehen ist. Die Deichselwangen (39) werden mit Hilfe eines sicherbaren Bolzens oder einer Schraube (44) im gewünschten Abstand von der Kugel (35) drehbar verbunden.

Sollte es sinnvoll sein, den Drehpunkt der Deichsel noch vor die Kugel (35) zu legen, so wird die Zugkugelkupplung mit dem Deichselsnunmel (43) nach vom am Pkw angekuppelt. Nun kann der Drehpunkt vor die Kugel (35) verlegt werden.

Die Deichselwangen sind unten mit einem Anschlag (46) versehen. Er ist so bemessen, dass er unterhalb der Kugel (35) fast gegen den Fuß der Kugel (35) stößt. Damit wird erreicht, dass das Kippmoment des aufgerichteten Anhängers zusätzlich abgefangen und damit die Belastung der Sicherung reduziert wird. Die Größe des Spaltes zwischen Anschlag (45) und

Fuß der Kugel richtet sich danach, welche Abwärtsneigung der Deichsel z.B. während der Fahrt zugelassen werden soll.

Die Dreiteilung der Gesamtlänge erfordert, dass die Deichsel etwa in Höhe des Beginns der Ladefläche erneut knickbar sein muss. Dazu wird in diesem Bereich eine weitere drehbare Verbindung vorgesehen. Dies kann z.B. eine handelsübliche Zahnraster-Kupplung (42) sein, wie sie für kröpfbare Deichseln üblich ist.

Alternativ kann diese Kupplung auch aus zwei gebogenen Wangen (48) mit einer viereckigen Öffnung an einem Deichselende und einem etwa waagerecht liegenden Vierkant (49) am anderen Ende der Deichsel bestehen. Eine Wange ist abnehmbar. Schrauben pressen die lose Wange auf den Vierkant (49) So wird am Knickpunkt der Deichsel (36) eine Verbindung in gestreckter, oder um 90° oder 180° geknickter Form herstellbar.

Die Verbindung zwischen Kugelkopf und Kugelkopfkupplung erlaubt eine beschränkte Verstellung. Damit kann sich die Deichsel des Anhängers je nach den Bodenverhältnissen mit seiner Längsachse gegenüber der Längsachse des Pkw verstellen.

Bei hochgeklapptem Anhänger dagegen ist eine starre Verbindung zwischen dem Kugelkopf des Zugfahrzeugs und der Kupplung zwingend, damit der Anhänger in allen Dimensionen starr verbunden ist.

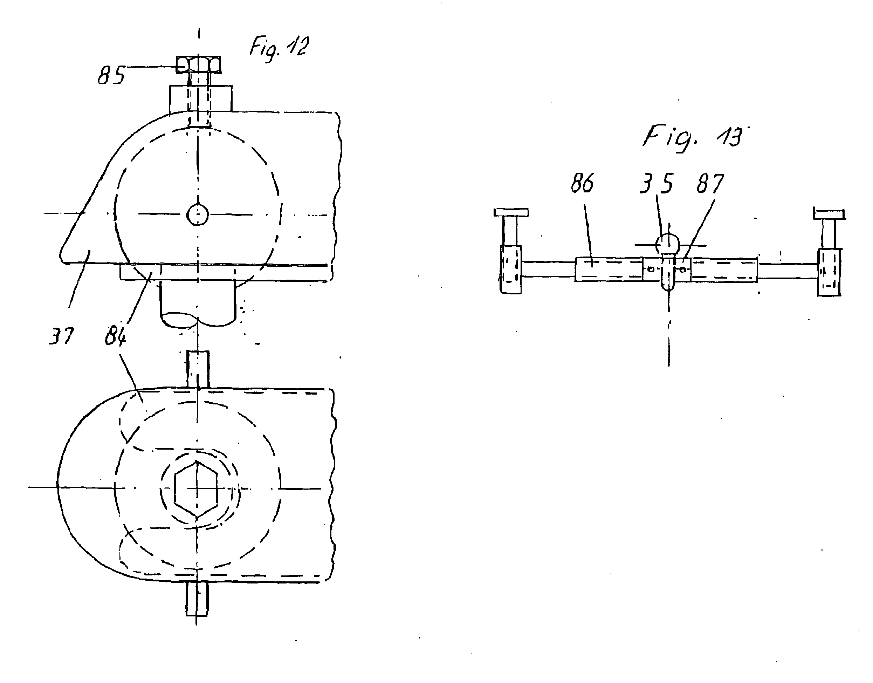

Nachfolgend werden mehrere, den Aufgabenstellungen der Erfindung entsprechende Lösungsmöglichkeiten beschrieben und in Fig. 4 und 12 dargestellt.

In einer Alternative erhält der Kugelkopf (35) eine leicht konische senkrechte Bohrung (81), in die z.B. mit einem Steilgewinde ein passend konisch geformter Bolzen (82) eingreifen kann. Die leicht konische Form sichert einen Pass-Sitz ohne Toleranzen. Ist der Bolzen abgesenkt, gibt er einem Formstück (83) den Weg frei, Erst jetzt kann der Anhänger hochgeklappt werden.

In gleicher Weise kann ein Bolzen, passend zu Bohrungen in beliebiger Richtung in Kugelkopf und Kupplung vorgesehen werden, um eine starre Verbindung zwischen beiden Teilen sicherzustellen. Mit Hilfe eines z.B. an einer Deichselwange befestigten Formstücks kann sichergestellt werden, dass nur ein eingesetzter Bolzen ein Hochklappen des Anhängers ermöglicht

In einer weiteren Alternative besitzt die Kugelkopfkupplung im unteren Bereich einen gabelförmigen Schieber (84), der sich unter den Kugelkopf schieben lässt, Eine Schraube (85), angezogen. führt zu einem Press-Sitz und damit zu einer starren lasitragenden - Verbindung zwischen Kugelkopf und Kupplung.

Um die Querstabilität des hochgeklappten Anhängers sicherzustellen, kann ein Querträger (86) mit einer Schelle (87) am Kugelkopfkörper des Zugfahrzeugs befestigt werden (Fig. 13). Die beiden Arme des Querträgers können in ihrer Länge veränderbar sein. Sie tragen an ihren Enden senkrechte Stützträger, die ebenfalls längenveränderbar sind. Sie tragen an geeigneter Stelle den hochgeklappten Anhänger und verhindern ein seitliches Kippen des Anhängers.

Für diese Sichenihgsfunktion sind weitere erfindungsgemäße Möglichkeiten denkbar. Alternativ zur Aufteilung des Laderaums in zwei Halbwannen kann vorgesehen werden, dass allein der vordere Teil des Laderaums als Halbwanne ( 3) ausgestaltet ist. Der Boden für den hinteren Teil der Ladefläche ist drehbar am dem vorderen Bodenteil (13) so angelenkt, dass der hintere Teil auf den vorderen Teil geklappt werden kann. Die Seitenwandholme (6) werden außen von ausziehbaren hinteren Seitenwandholmen (51) umfasst. In ausgezogenern Zustand bleiben sie mit den vorderen Seitenwandholmen um ein Geringes überlappt. Mit Steckbolzen (52) im Obergurt sind die Seitenwandholme (6) und (51) kraftübertragend und sicherbar verbunden.

Die beiden hinteren Seitenwandholme (61) sind untereinander quer mit einer Schiene (53) starr verbunden. Sie ragt an der Auflagekante (54) nach innen und dient als Auflage für den nach hinten ausgeklappten Boden. Ebenso ragen die Unterkanten der Seitenholme (51) nach innen und dienen als Auflage (54) für den hinteren Boden.

Eine erfindungsgemäße Lösung für den Einsatz von Anhängern mit kurzer Ladefläche (Reduzierung auf die Hälfte der Gesamtlänge des Anhängers) ist in Fig.2 dargestellt.

Die Verbindung zwischen Kugelkopf des Pkw (35) und der Deichsel erfolgt wie bereits geschildert, ebenso kommt vor der Ladefläche die bereits geschilderte knickbare Verbindung zum Einsatz. Die nach hinten offene Ladefläche wird durch eine Plane verschlossen. Alternativ dazu ist in Fig. 3 die Nutzung einer teleskopierbaren Deichsel (46) dargestellt Die Verbindung zwischen Kugelkopf des Pkw (35) und der Deichsel (46) erfolgt wie bereits geschildert Die Deichsel selbst ist einteilig teleskopierbar. Das dickere Teleskoprohr ist unter der Ladefläche angebracht und kann mit der Achse( 31) kraftübertragend verbunden sein. Es kann weiter lasttragend gegenüber der Ladefläche genutzt werden. Die Vorderkante des Rohres endet so weit hinter der Vorderkante der Ladefläche, dass die Zugkugelkupplung (37) noch weitgehend unter der Ladefläche Platz findet so, dass gerade noch eine Senkrechtstellung der Deichsel (35) vor der Ladefläche möglich ist.

Soll der Anhänger aufgerichtet eine extrem niedrige Lage haben, soll also die Vorderkante der Ladefläche tiefer liegen als der Kugelkopf des Fahrzeugs, so kann ein verschließbarer Einschnitt in Stirnwandholm (8) und in der Bodenplatte (13) vorgesehen werden, in den dann der Kugelkopf hineinragt.

Das Zusammenfalten des dreigeteilten Anhängers erfolgt in folgenden Arbeitsschritten:
1. Die Setzborde werden abgenommen und auf der Ladefläche verstaut,
2. die hintere Halbwanne wird von Hand auf die vordere Halbwanne geklappt und verriegelt.
3. Die Zahnraster-Kupplung (42) vor der Vorderwanne wird gelöst und von Hand nach oben gehoben. Dabei ruht das Gewicht des Anhängers noch auf den Rädern.
4. Zum Schluss wird der zusammengeklappte Anhänger nach vom bis in die entgültige senkrechte Stellung gedrückt. Dabei lösen sich die Räder vom Boden.
5. Dieser Arbeitsschritt kann durch Federkraft wie geschildert unterstützt werden.

Häufig werden Anhänger an Pkw zum Schüttgut-Transport z.B. Sand benutzt. Die Bauart des Anhängers bestehend aus zwei Halbwannen, erlaubt eine kraftsparende und schnelle Entladung mit folgenden Arbeitsschritten
1. Der Anhänger wird abgekuppelt und die Deichsel so weit wie möglich abgesenkt.
2. Die rückwärtige Stütze (34) wird so weit wie möglich ausgefahren und arretiert.
3. Die Sicherung zwischen den Seitenholmen unten wird gelöst, die Schwerkraft des Kieses drückt nach unten , der mittig lagernde Kies tritt aus.
4. Die hintere halbentleerte Wanne wird von Hand angehoben und restentleert.
5. Mit der Deichsel wird die vordere Halbwanne angehoben und ebenfalls restentleert.

Von besonderem Interesse für die Nutzung der erfindungsgemäß ausgestaltetenAnhänger besteht für den Transport z.B. von Motorrädern, 4-rädrigen Sportfahrzeugen (Quads) und für den Transport von Rollstühlen, insbesondere motorgetriebenen Rollstühlen, die wegen ihres Volumens nicht in Pkw transportierbar sind.

Beispielhaft ist in Fig. 8 ein Anhänger zum Transport von Motorrädern in Seitenansicht und in Fig. 9 in Draufsicht dargestellt, gestrichelt ist der Anhänger zum Transport von nur einem Motorrad, ausgestattet mit durchgehenden Rollschienen (63) dargestellt.

Fig. 10 zeigt im Ausschnitt die Gestaltung des Querträgers mit den Arretierungen für das Motorrad.

Fig. 11 zeigt den Querschnitt einer in der Breite verstellbaren Rollschiene (63).

Der Anhänger wird je nach den Bedürfnissen mit ein, zwei oder mehr Rollschienen nebeneinander ausgestattet Sie sind vornehmlich starr auf dem Unterteil des Anhängers befestigt. Dabei kann vorgesehen werden, dass sie in verschiedenem Abstand zueinander befestigbar sind, um entweder den unterschiedlichen Breiten der Motorräder oder dem unterschiedlichen Spurabstand von mehrrädrigen Fahrzeugen Rechnung zu tragen.

Die Rollschienen (63) haben in der Regel einen nach oben offenen U-förmigen Querschnitt, wobei die Schenkel sich schräg nach oben öffnen. Die Breite der Rollfläche ist durch Ausstattung eines Teils mit Langlöchern verstellbar. Bei richtiger Einstellung des Abstandes keilen sich die Räder in der Rollschiene fest und sind so seitlich sicher arretiert. An der Rollschiene sind vom mindestens eine, meist 2 Halterungen beiklappbar angeordnet. Sie besitzen einen Schuh mit ähnlichem Querschnitt wie die Rollschienen. Bei Beladen rollt das vordere Rad in die Halterung mit dem Schuh und wird dort arretiert. Damit ist das Motorrad gegen Umfallen gesichert. Eine gleiche Halterung kann für den hinteren Bereich des vorderen Rades beiklappbar vorgesehen sein. Damit ist das vordere Rad in jeder Dimension sicher gehaltert. Eine gleiche Sicherung kann für das hintere Rad vorgesehen werden.

Um dem Anhänger beim Be- und Entladen eine notwendige Neigung zu geben, wird im Bereich der Deichsel eine beiklappbare Stütze vorgesehen, die auf verschiedene Höhen einstellbar sein kann und so eine Neigung des Anhängers mit Bodenberührung am Heck gewährleisten

Bei einer sich daraus ergebenden Neigung macht es erhebliche Schwierigkeiten, z-B. ein Motorrad mit einem Gewicht von ca 250 kg bei Neigung hinaufzuschieben. Das Auffahren mit eigenem Antrieb des Motorrades borgt vielfältige Gefahren. Es ist daher Erfindungsgemäß vorgesehen, dass die beim Entladen anfallende Energien einem Kraftspeicher geladen wird und dann beim Beladen einen wesentlichen Teil der benötigten Schubkraft bergauf bereitstellt.

Dazu wird bei fest eingebauter Rollschiene ein Seil (70) mit einer Rolle über die aufrecht stehende Halterung (64) geführt und am Vorderrad befestigt. Das Seil wird an der Vorderkante des Anhängers über eine dort angeordnete Rolle (72) zum einem im Raum unter Rollschiene zweckmäßig angebrachten Kraftspeicher (71) geführt. Der Kraftspeicher kann vornehmlich durch eine Zugfeder, ein Gummiseil oder eine Gasdruckfeder dargestellt sein. Wegen der nur beschränkt unter der Rollschiene und dem Bewegungsweg des Motorrades erscheint es zweckmäßig, das Zugseil flaschenzugmäßig mit mindestens einer Rolle, zwei oder drei an den Kraftspeicher anzubinden.

Kommt eine auf dem Anhänger bewegliche Rollschiene oder ein Querträger (67) zum Einsatz, dann wird das Zugseil an diesem angeschlagen.

Der Kraftspeicher kann auf verschiedene Speicherkräfte einstellbar sein, damit einerseits Ein Abladen überhaupt möglich wird und andererseits eine größtmögliche Entlastung beim Beladen gewährleistet ist.

Um ein erfindungsgemäß notwendiges minimales Gewicht des Anhängers entsprechend der Tragfähigkeit der Kugelkupplung zu gewährleisten, kommen Räder mit minimalem Durchmesser zum Einsatz-Ihre Tragfähigkeit ist beschränkt und reicht z.B. für den Transport zweier Motorräder nicht aus. Erfindungsgemäß kommen dann zwei Räder je Spur zum Einsatz, deren Achsstummel an einem Doppelradbalken (62) befestigt sind, der wiederum drehbar am Achshebel (32) angebracht ist.

Ergänzend zu den beschriebenen Alternativen zu einer notwendigen starren Verbindung zwischen Anhängerkupplung (37) und Kugelkopf (35) im aufgerichteten Zustand des Anhängers kann ein Presssitz zwischen den beiden Teilen durch eine mechanisch oder hydraulisch erfolgte Druckkraft erzeugt werden. Diese Druckkraft kann auf eine Halbschale wirken, die den Kugelkopf teilweise umfasst und so den Presssitz erzeugt. Mechanisch kann die Druckkraft z.B. durch einen Hebel erzeugt werden, der mit einem zweckentsprechenden Hebelarm auf die Halbschale wirkt und der arretierbar ist.

### VERLASTBARER ANHÄNGER TEILELISTE

- 1.: Anhänger
- 2.: -
- 3.: vordere Halbwanne
- 4.: hintere Halbwanne
- 5.: Mittelwanne
- 6.: Seitenwandholm
- 7.: Achsverstärkung
- 8.: Stimwandholm
- 9.: Heckwand
- 10.: Mittelwand
- 11.: Fuge
- 12.: Beschlag
- 13.: Boden
- 14.: .-
- 15.: Schamier oben
- 16.: Schamier unten
- 17.: Sicherung oben
- 18.: Sicherung unten
- 19.: Sicherungsbolzen
- 20.: -
- 21.: -
- 22.: Setzbord Seite
- 23.: Setzbord vorn/hinten
- 24.: Setzbordrahmen
- 25.: Setzbordnut
- 26.: Setzbordstange
- 27.: Stangenloch
senkrecht
- 28.: Stangenloch
waagerecht
- 29.: Hebelbeschlag
- 30.: Rad
- 31.: Achse / Feder
- 32.: Achshebel
- 33.: Achsauflage
- 34,: Stütze
- 35.: Kugel Pkw
- 36.:
- 37.: Deichsel
- 38.: Bolzen
- 39.: Deichselwangen
- 40.: Sicherung
- 41.: Auflagebock
- 42.: Zahnraster-Kupplung
- 43.: Deichselstummel
- 44.: Bolzen
- 45.: Anschlag
- 46.: Teleskop-Deichsel
- 47.: -
- 48.: gebogene Wange
- 49.: Vierkant
- 50.: -
- 51: Seitenholm ausziehb.
- 52.: Steckbolzen
- 53.: Schiene
- 54.: Auflagekante
- 60.: V-Deichsel
- 61.: Schutzrahmen
- 62.: Doppelradbalken
- 63.: Rollschiene
- 64.: Halterung
- 65.: Kotflügel
- 66.: Sicherung
- 67.: Querträger
- 68: Schiene / Rohr
- 69.: -
- 70.: Seil
- 71.: Kraftspeicher
- 72.: Rolle 1
- 73.: Rolle 2
- 74.: -
- 75.: Entsperrung
- 76.: Hebel
- 77.: Haltestift
- 78.: Feder
- 79.: Handrad
- 80.: Vierkant
- 81.: konische Bohrung
- 82.: konischer Bolzen
- 83.: Fonnstück
- 84.: Schieber
- 85.: Schraube
- 86.: Querträger
- 87.: Schelle

## Patentansprüche

1. Anhänger für Pkw und andere Fahrzeug, der sowohl auf eigenen Rädern lasttragend gezogen wie auch vornehmlich ohne Last in etwa senkrechter Position hochgeklappt ohne Bodenberührung vom Zugfahrzeug getragen wird, **dadurch gekennzeichnet, dass** die Verbindung zwischen Anhänger und Zugfahrzeug sowohl rollend als auch aufgerichtet über eine Kugelkopf-Kupplung erfolgt und der Kugelkopf (35) mit einer Bohrung (81), die leicht konisch sein kann, versehen wird, die Kugelkopfkupplung (37) korrespondierende Bohrungen erhält und beide Teile durch einen Bolzen (82) miteinander starr verbindbar sind.

2. Anhänger für Pkw und andere Fahrzeug, der sowohl auf eigenen Rädern lasttragend gezogen wie auch vornehmlich ohne Last in etwa senkrechter Position hochgeklappt ohne Bodenberührung vom Zugfahrzeug getragen wird, **dadurch gekennzeichnet, dass** die Verbindung zwischen Anhänger und Zugfahrzeug sowohl rollend als auch aufgerichtet über eine übliche Kugelkopfkupplung erfolgt und dass die Kugelkopfkupplung (37) an ihrer Unterseite einen gabelförmigen Schieber (84) besitzt, der nach dem Kuppeln unter den unteren Teil des Kugelkopfes (35) geschoben wird und die Kupplung mittig über dem Kugelkopf (35) eine Schraube (85) trägt, die nach dem Vorschieben des gabelförmigen Schiebers (84) eine starre Verbindung zwischen Kugelkopf (35) und Kupplung (37) herstellt.

3. Anhänger nach Anspruch 1 und 2, **dadurch gekennzeichnet, dass** am Fuß des Kugelkopfes (35) mit Schelle (87) ein nach beiden Seiten in der Länge veränderbarer Querträger (86) befestigt ist und an beiden äußeren Enden senkrechte, längenverstellbare Stützträger (88) angebracht sind und weitere Abstützungen gegenüber der Kugelkopfhalterung zusätzliche Fixierungen erbringen können.

4. Anhänger nach Anspruch 1,2 und 3, **dadurch gekennzeichnet, dass** die Ladefläche als Wanne(3,4) mit vornehmlich fest verbundenen Seiten und - Stirnwänden verbunden ist und weiter, dass diese Wanne einteilig oder mehrteilig ausgebildet sein kann und in der mehrteiligen Ausführung in Querrichtung geteilt sein kann und weiter **dadurch** gekenn zeichnet, dass die Wannenteile(3,4) an ihrer Oberkante um eine Querachse (15) drehbar sind und die Verbindung zugbelastet ist und die Wannenteile in Höhe der Ladefläche(18) arretierbar sind.

5. Anhänger nach Anspruch 1,2 und 3, **dadurch gekennzeichnet, dass** die Wanne gem. Anspruch 4 z.B. bei dreiteiliger Ausführung des Anhängers zwei Wannenteile((3,4) besitzt, die in der Ladeflächenebene drehbar miteinander verbunden sind und an ihren Oberkanten der Seitenwände mit einer lösbaren Sicherung versehen sind, die die dort auftretende Zugbelastung der selbstragenden Wanne aufnimmt.

6. Anhänger nach Anspruch 1,2 und 3, **dadurch gekennzeichnet, dass** die Wanne mit Setzborden (221,23,24 )zur Vergrößerung des umschlossenen Laderaums ausgestattet sein kann, die vornehmlich mit nach unten ragendenden Stangen, Rohren (26) o.ä versehen sind, die in korrespondierende Öffnungen der Seitenwände der Wanne oder Wannenteile senkrecht (27) einsteckbar sind und weiter in etwa waagerechte Öffnungen (28) in den Seitenwänden verwahrbar sind.

7. Anhänger nach Anspruch 1,2, 3, 4 und 5 **dadurch gekennzeichnet, dass** bei einer Aufteilung des Anhängers in etwa Drittel der Gesamtlänge das hintere Wannenteil auf das vordere Wannenteil geklappt und danach beide Wannenteile um das Deichselgelenk (42) sich drehend in fast senkrechte Position gebracht werden und dabei die Räder auf dem Boden rollend das Gewicht des Anhängers tragen.

8. Anhänger nach Anspruch 1, 2. 3, 4, 5, 6 und 7, **dadurch gekennzeichnet, dass** z.B. eine Drehfeder im Gelenk oder eine Zugfeder in zweckmäßiger Anbringung vorgesehen ist zur Kraftentlastung beim Aufrichten des Anhängers in etwa senkrechte Position ohne Bodenberührung des Räder.

9. Anhänger nach Ansprüche 1 und 2,, **dadurch gekennzeichnet, dass** er für den Transport von Fahrzeugen besonders ausgestattet ist, insbesondere für jedes Rad oder für jede Spur von 2 Rädern des zu transportierenden Fahrzeugs mit einer besonderen Rollschiene (63) ausgestattet ist und diese Rollschienen in Verladerichtung beweglich auf dem Anhänger angebracht sein können.

10. Anhänger nach Anspruch 1,2 und 9, **dadurch gekennzeichnet, dass** die Rollschiene (63) einen etwa U-förmigen Querschnitt mit schräg nach oben erweiterten Schenkeln hat und der Abstand zwischen den Schenkeln verstellbar sein kann.

11. Anhänger nach Anspruch 1,2,9 und 10, **dadurch gekennzeichnet, dass** für jeweils mindestens 1 Rad jeder Spur eine Halterung (64) vorgesehen ist, die in zweckmäßigem Abstand über der Rollschienenfläche das Rad seitlich und in Fahrtrichtung eingrenzt, einen sicheren Stand des Rades und damit des Fahrzeugs gewährleistend und dass die Halterung mit einer Sicherung (66) versehen ist, die z.B. die Felge umgreifend das Rad in der Halterung (64) unbeweglich machend arretiert.

12. Anhänger nach Anspruch 1, 2, 9. 10 und 11, **dadurch gekennzeichnet, dass** die Rollschiene in der Länge auf etwa Raddurchmesser + Bedarf für die Halterungen beschränkt und als Querträger (67) ausgebildet ist der mittels Rollen in seitlich offenen U-förmigen Schienen oder mit halbrund ausgehöhlten Rollen zwischen Rohren geführt bewegbar sind und der Querträger für die Befestigung von einem oder mehreren Rädern einer Achse ausgebildet sein kann.

13. Anhänger nach Anspruch 1,2,9, 10, 11 und 12, **dadurch gekennzeichnet, dass** der Anhänger mit Hilfe einer verstellbaren und beiklappbaren Stütze(34) so geneigt aufgestellt werden kann, dass entweder bei Anwendung von Anspruch 12 das Heck des Anhängers den Boden berührt oder bei Nutzung von durchgehenden Rollschienen der Anhänger mit nach hinten ausgezogener Rollschiene so weit geneigt werden kann, dass eine etwa gleiche Neigung für beide Teile während des Ladevorgangs erzielt wird und dann das Heck des Anhängers mit weiteren beiklappbaren Stützen ausgerüstet ist.

14. Anhänger nach Anspruch 1, 2 und 9, 10, 11, 12 und 13, **dadurch gekennzeichnet, dass** die vordere Haltevorrichtung z.B. mit einem Seil (70) mit Umlenkrolle (72) am vorderen Teil des Anhängers mit einem Kraftspeicher(71)( Zug- oder Druckfeder, Gasdruckfeder, Gummizug o.ä.) verbunden ist und das Seil flaschenzugähnlich am Kopf des Kraftspeichers abermals umgelenkt und an geeigneter arretiert sein kann und der Kraftspeicher verstellbar oder auf unterschiedliche Zugerfordernisse einstellbar gestaltet sein kann.

15. Anhänger nach Anspruch 1, 2, und 9, **dadurch gekennzeichnet, dass** alle in senkrechter Position des Anhängers Fahrwiderstand erzeugenden Flächen fahrtwinddurchlässig gestaltet sind.

16. Anhänger nach Anspruch 1,2 und 9 , **dadurch gekennzeichnet, dass** bei dem Anhänger zur Erhöhung der Tragfähigkeit bei minimalem Gewicht je zwei Räder in einer Spur zum Einsatz kommen und die beiden Räder über einen Doppelradbalken (62) am Lenker der Achse angebracht sind.

17. Anhänger nach Anspruch 1 und 2, **dadurch gekennzeichnet, dass** eine starre Verbindung zwischen Kupplung (37) und Kugelkopf (35) durch einen Presssitz gewonnen wird und dieser Presssitz durch eine hydraulisch oder mechanisch, z.B. durch Hebelwirkung, erzeugte Druckkraft erzielt wird.

## Claims

1. Trailer for passenger cars and other vehicles, which is both towed on its own wheels in a load-bearing manner and also carried by the towing vehicle predominantly without load and folded up in an approximately vertical position without touching the ground,
**characterised in that** the connection between the trailer and the towing vehicle both when rolling and when erected is made by means of a ball-type coupling, and the ball end (35) is provided with a bore (81), which can be slightly conical, the ball-type coupling (37) has corresponding bores, and both parts can be connected rigidly to each other by means of a bolt (82).

2. Trailer for passenger cars and other vehicles, which is both towed on its own wheels in a load-bearing manner and also carried by the towing vehicle predominantly without load and folded up in an approximately vertical position without touching the ground,
**characterised in that** the connection between the trailer and towing vehicle both when rolling and when erected is made by means of a conventional ball-type coupling, and that the ball-type coupling (37) has on its underside a fork-shaped slide (84), which is pushed after coupling under the lower part of the ball end (35), and the coupling bears a screw centrally over the ball end (35), which screw produces a rigid connection between the ball end (35) and coupling (37) after the fork-shaped slide (84) has been pushed forward.

3. Trailer according to Claims 1 and 2, **characterised in that** a cross member (86), whose length can be varied towards both sides, is fastened at the foot of the ball end (35) with a clamp (87), and vertical support members (88), whose length can be adjusted, are attached at both outer ends, and further supports can produce additional fastenings with respect to the ball-end retainer.

4. Trailer according to Claims 1, 2 and 3, **characterised in that** the loading face is connected as a well (3, 4) with predominantly permanently connected side and end walls, and further that the said well can have a single or multi-part configuration, and in the multi-part configuration can be divided in the transverse direction, and furthermore **characterised in that** the well parts (3, 4) can be rotated about a transverse axis (15) at their upper edge, and the connection is subjected to tensile loading, and the well parts can be locked at the height of the loading face (1B).

5. Trailer according to Claims 1, 2 and 3, **characterised in that** the well according to Claim 4 for example in the case of the three-part configuration of the trailer has two well parts (3, 4), which are connected to each other at the loading face level in such a manner that they can rotate, and are provided at the upper edges of their side walls with a releasable lock, which absorbs the tensile loading of the self-supporting well which occurs there.

6. Trailer according to Claims 1, 2 and 3, **characterised in that** the well can be equipped with weather boards (221, 23, 24) for enlarging the enclosed load space, which are predominantly provided with downward projecting rods, tubes (26) or the like, which can be inserted vertically (27) in corresponding openings in the side walls of the well or well parts and can further be stowed in approximately horizontal openings (28) in the side walls.

7. Trailer according to Claims 1, 2, 3, 4 and 5, **characterised in that**, when the trailer is divided approximately into thirds of the entire length, the rear well part is folded onto the front well part and then both well parts are brought into an almost vertical position while being rotated about the drawbar joint (42) and in the process the wheels bear the weight of the trailer while rolling on the ground.

8. Trailer according to Claims 1, 2, 3, 4, 5, 6 and 7, **characterised in that,** for example a rotating spring in the joint or a tensile spring in an expedient attachment is provided for relieving the force while the trailer is being erected in an approximately vertical position without the wheels touching the ground.

9. Trailer according to Claims 1 and 2, **characterised in that** it is particularly equipped for transporting vehicles, in particular is equipped with a specific rolling rail (63) for each wheel or each track of 2 wheels of the vehicle to be transported, and these rolling rails can be attached on the trailer in such a manner that they can move in the loading direction.

10. Trailer according to Claims 1, 2 and 9, **characterised in that** the rolling rail (63) has an approximately U-shaped cross section with sides which widen obliquely upwards, and the distance between the sides can be adjusted.

11. Trailer according to Claims 1, 2, 9 and 10, **characterised in that** for in each case at least 1 wheel of each track a retainer (64) is provided, which at an expedient distance limits the wheel over the rolling rail face laterally and in the direction of travel, ensures a secure standstill of the wheel and thus the vehicle, and that the retainer is provided with a lock (66), which locks the wheel immovably in the retainer (64) while for example grasping the rim.

12. Trailer according to Claims 1, 2, 9, 10 and 11, **characterised in that** the length of the rolling rail is limited to approximately the wheel diameter + the requirement for the retainers and the rolling rail is configured as a cross member (67), which can be moved by means of rollers in laterally open U-shaped rails or guided between tubes by means of rollers which are hollowed out in a semi-circular manner, and the cross member can be configured for fastening one or a plurality of wheels of an axle.

13. Trailer according to Claims 1, 2, 9, 10, 11 and 12, **characterised in that** the trailer can be positioned in an inclined manner with the aid of an adjustable and foldable prop (34) in such a manner that either, where Claim 12 applies, the rear of the trailer can touch the ground or, where continuous rolling rails are used, the trailer with the rolling rail pulled out to the rear can be inclined so far that approximately the same inclination can be achieved for both parts during the loading process, and then the rear of the trailer is equipped with further foldable props.

14. Trailer according to Claims 1, 2 and 9, 10, 11, 12 and 13, **characterised in that** the front retaining device is connected for example with a cable (70) with a pulley (72) on the front part of the trailer with an energy store (71) (tensile or pressure spring, gas spring, elastic band or others), and the cable can be redirected repeatedly in a block-and-tackle-like manner at the head of the energy store and locked at a suitable point, and the energy store can be configured to be adjustable or able to be set to various towing requirements.

15. Trailer according to Claim 1, 2 and 9, **characterised in that** all faces which produce driving resistance when the trailer is in the vertical position are designed to allow wind through.

16. Trailer according to Claims 1, 2 and 9, **characterised in that** in the trailer two wheels are used per track in order to increase the load capacity with minimum weight and the two wheels are attached by means of a double-wheel bar (62) to the link of the axle.

17. Trailer according to Claim 1 and 2, **characterised in that** a rigid connection is obtained between the coupling (37) and the ball end (35) by means of a press fit and this press fit is achieved by a hydraulically or mechanically produced compressive force, for example by lever action.

## Revendications

1. Remorque pour voitures et pour d'autres véhicules, pouvant non seulement être tractée sous charge sur ses propres roues, mais également et particulièrement être portée sans charge par le véhicule tracteur, dans une position relevée presque verticale, sans contact avec le sol, l'attelage entre la remorque et le véhicule tracteur étant **caractérisé**, que ce soit en traction au sol ou en position relevée, par un accouplement à boule, dont la boule (35) est munie d'un perçage (81) pouvant être légèrement conique et dont la tête d'attelage (37) comporte les perçages correspondants, de sorte à ce que les deux pièces puissent être fixées ensemble par un goujon (82).

2. Remorque pour voitures et pour d'autres véhicules, pouvant non seulement être tirée sous charge sur ses propres roues, mais également et particulièrement être portée sans charge par le véhicule tracteur, dans une position relevée presque verticale sans contact avec le sol, l'attelage entre la remorque et le véhicule tracteur étant **caractérisé**, que ce soit en traction au sol ou en position relevée, par un accouplement usuel à boule, dont la tête d'attelage (37) comporte à sa partie inférieure un coulisseau (84) de forme fourchue, qui après accouplement, est glissé sous la partie inférieure de la boule d'attelage (35), l'accouplement étant pourvu d'une vis située au milieu juste au dessus de la boule d'attelage (35), créant ainsi un assemblage fixe entre la boule (35) et la tête d'attelage (37) lorsque le coulisseau fourchu (84) est avancé.

3. Remorque selon les revendications 1 et 2, **caractérisée par** la fixation au pied de la boule d'attelage (35) munie d'un collier (87), d'une traverse (86) modifiable en longueur des deux côtés, celle-ci étant équipée à ses extrémités de supports verticaux (88) modifiables en longueur, qui peuvent servir de supports complémentaires par rapport à la fixation de la boule d'attelage.

4. Remorque selon la revendication 1, 2 et 3, **caractérisée par le fait que** la surface de chargement soit conçue en tant que caisse (3, 4), en particulier par un assemblage sûr de pans latéraux et frontaux, la caisse pouvant être formée d'une ou de plusieurs pièces, et dont la version en plusieurs pièces est divisible transversalement en étant **caractérisée par** la mobilité des pièces de la caisse (3, 4) autour d'un axe transversal (15) situé à leurs bords supérieurs et par le fait que lors de l'assemblage sous traction, les pièces de la caisse peuvent êtres bloquées au niveau de la surface de chargement (1B).

5. Remorque selon la revendication 1, 2 et 3 **caractérisée en ce que** la caisse selon la revendication 4, par exemple en version 3 parties, comporte 2 pièces (3, 4) à assemblage pivotant au niveau de la surface de charge et qui sont équipées aux bords supérieurs des pans latéraux, d'une fixation de sécurité démontable, qui absorbe la charge de traction exercée sur la caisse autoporteuse.

6. Remorque selon la revendication 1, 2 et 3, **caractérisée en ce que** la caisse puisse être équipée de panneaux (221, 23, 24), destinés à agrandir le volume de charge de celle-ci, ces panneaux étant munis en particulier de barres, de tubes (26) ou d'éléments similaires, qui sont d'une part insérables verticalement dans des orifices correspondants, situés dans les pans latéraux ou dans d'autres parties de la caisse (27) et qui d'autre part peuvent être logés dans des ouvertures (28) presque horizontales dans les pans latéraux.

7. Remorque selon la revendication 1, 2, 3, 4 et 5, **caractérisée** lors d'une répartition de la remorque sur environ un tiers de sa longueur, par le fait que la partie arrière de la caisse puisse être rabattue sur la partie avant, pour ensuite être ramenées ensemble par rotation autour du bras d'attelage (42) en position presque verticale, les roues étant en contact avec le sol, supportent le poids de la remorque.

8. Remorque selon la revendication 1, 2, 3, 4, 5, 6 et 7, **caractérisée par** exemple par l'équipement d'un ressort de torsion dans l'articulation ou d'un ressort de traction monté adéquatement, pour délester la charge lors du redressement en position presque verticale de la remorque pour un usage sans contact des roues avec le sol.

9. Remorque selon la revendication 1, et 2, **caractérisée par** son équipement spécial pour le transport de véhicules, celui-ci étant constitué en particulier par un rail de roulement spécial (63) pour chaque roue ou pour chaque voie de 2 roues du véhicule à transporter, et que ce rail puisse coulisser sur la remorque dans le sens du chargement.

10. Remorque selon la revendication 1, 2 et 9, **caractérisée en ce que** le rail de roulement (63) ait une section approximative en U et qu'il soit équipé de rallongements obliques qui s'élargissent vers le haut, l'écart de ces rallongements pouvant être réglable.

11. Remorque selon la revendication 1, 2, 9 et 10, **caractérisée par** l'équipement d'attaches (64) pour un minimum d'une roue sur chaque voie, qui retiennent la roue latéralement et dans le sens de la marche avec un écart adéquat sur la surface du rail de roulement, en assurant ainsi la position fixe de la roue et par conséquence du véhicule, chaque attache étant munie d'une fixation de sécurité (66) qui s'agrippe par exemple à la jante de la roue en bloquant celle-ci dans l'attache (64).

12. Remorque selon la revendication 1, 2, 9, 10 et 11, **caractérisée en ce que** le rail de roulement soit conçu en tant que système à traverse (67), sur une longueur limitée environ égale au diamètre de la roue plus le surplus nécessaire pour l'attache, ce système étant guidé et mobile entre des tubes, à l'aide de rouleaux situés dans des rails en forme de U ouverts latéralement ou par des rouleaux creux semi-circulaires et que ce système à traverse puisse être conçu pour la fixation d'une ou de plusieurs roues d'un essieu.

13. Remorque selon la revendication 1, 2, 9, 10, 11 et 12, **caractérisée par** l'équipement d'un support (34) réglable et rabattable, qui permet de positionner la remorque en inclinaison de telle manière que la partie arrière touche le sol en usage avec la revendication 12, ou qu'elle soit équipée de supports supplémentaires rabattables à sa partie arrière pour être utilisée en combinaison avec des rails de roulement sur toute la longueur et puisse être inclinée de telle sorte, que les rails étant sortis, l'inclinaison soit à peu près égale pour les deux parties, pendant l'opération de chargement.

14. Remorque selon la revendication 1, 2 et 9, 10, 11, 12 et 13, **caractérisée en ce que** le dispositif de fixation à l'avant soit relié à travers un accumulateur d'énergie (71)(ressort de traction ou de compression, amortisseur à gaz sous pression, système élastique ou dispositif similaire) par exemple à un câble (70) avec poulie de renvoi (72), et qu'à la tête de l'accumulateur d'énergie, ce câble puisse à nouveau être dévié et arrêté à un point approprié de façon apparentée au système d'un palan, l'accumulateur pouvant être ajustable ou réglable pour différentes charges de traction.

15. Remorque selon la revendication 1, 2 et 9, **caractérisée par** la perméabilité au vent de face de toutes les surfaces en position verticale de la remorque, soumise à la résistance de roulement.

16. Remorque selon la revendication 1, 2 et 9, **caractérisée par** l'équipement de 2 roues par côté pour augmenter la capacité de charge avec un poids minimum, les deux roues étant reliées entre elles par une barre porteuse (62), qui elle-même est accouplée de chaque côté à l'articulation de l'essieu.

17. Remorque selon la revendication 1 et 2 **caractérisée en ce qu'**un assemblage fixe entre la tête (37) et la boule (35) d'attelage soit acquis à l'aide d'un ajustage serré, celui-ci étant réalisé par une force de pression hydraulique ou mécanique, comme par exemple par un effet de levier.
